# EUROPÄISCHE PATENTANMELDUNG

(11) **EP 4 425 062 A1**
(43) Veröffentlichungstag der Anmeldung: **04.09.2024**
(21) Anmeldenummer: 23159411.0
(22) Anmeldetag: 01.03.2023
(51) Int. Cl.: F24F 8/108, F24F 13/20, F24F 13/28

(54) **TRAGBARES LUFTREINIGUNGSSYSTEM UND STAPELANORDNUNG**

(71) Anmelder: Festool GmbH, 73240 Wendlingen am Neckar (DE)
(72) Erfinder: BARABEISCH, Markus, 89269 Vöhringen (DE); MÜLLER, Thorsten, 75175 Pforzheim (DE); WARTH, Tobias, 71364 Winnenden (DE)

(57) **Zusammenfassung**

Die Erfindung betrifft ein tragbares Luftreinigungssystem (1) umfassend ein Gehäuse (2) mit einer Bodenwand (16), einer Deckenwand (17) und sich zwischen der Bodenwand (16) und der Deckenwand (17) erstreckenden Seitenwänden (12), die einen Aufnahmeraum (3), insbesondere einen ersten Aufnahmeraum (3A), umgeben, wobei in dem Aufnahmeraum (3), insbesondere dem ersten Aufnahmeraum (3A), ein Strömungskanal (41) zur Aufnahme einer Luftfiltereinheit (40) angeordnet ist, der sich zwischen einem Lufteinlass (8) in einer ersten Seitenwand (12A) des Gehäuses (2) und einem Luftauslass (9) in zumindest einer zweiten Seitenwand (12B) des Gehäuses (2) erstreckt,
wobei die Luftfiltereinheit (40) einen Luftfilter (46) und einen um eine Rotationsachse (R) rotierbaren Lüfter (44) zur Erzeugung eines Luftstroms vom Lufteinlass (8) zum Luftauslass (9) aufweist. Eine durchströmte Fläche des Lufteinlass (8) ist kleiner oder gleich als eine durchströmte Fläche des Luftauslass (9) und/oder der Luftauslass (9) weist zumindest zwei Luftauslassabschnitte auf, die an zumindest zwei verschiedenen Seitenwänden (12), insbesondere von der ersten Seitenwand (12A) verschiedenen Seitenwänden (12), angeordnet sind.

## Beschreibung

Die Erfindung betrifft ein tragbares Luftreinigungssystem umfassend ein Gehäuse mit einer Bodenwand, einer Deckenwand und sich zwischen der Bodenwand und der Deckenwand erstreckenden Seitenwänden, die einen Aufnahmeraum, insbesondere einen ersten Aufnahmeraum, umgeben, wobei in dem Aufnahmeraum, insbesondere dem ersten Aufnahmeraum, ein Strömungskanal zur Aufnahme einer Luftfiltereinheit angeordnet ist, der sich zwischen einem Lufteinlass in einer ersten Seitenwand des Gehäuses und einem Luftauslass in zumindest einer zweiten Seitenwand des Gehäuses erstreckt, wobei die Luftfiltereinheit einen Luftfilter und einen um eine Rotationsachse rotierbaren Lüfter zur Erzeugung eines Luftstroms vom Lufteinlass zum Luftauslass aufweist. Die Seitenwände umfassen die erste Seitenwand sowie die zumindest eine zweite Seitenwand.

Tragbare Luftreinigungssysteme für den Einsatz auf Baustellen und im handwerklichen Bereich sind aus dem Stand der Technik allgemein bekannt. Diese werden in der Regel dazu verwendet verschmutzte oder staubige Luft aus einem abgedichteten Arbeitsraum abzusaugen und über eine Rohrleitung gefiltert an die Umwelt abzugeben. Auf diese Weise entsteht ein Unterdruck innerhalb des Arbeitsraums, der verhindert, dass verschmutzte oder staubige Luft in an den Arbeitsraum angrenzende Räume oder Bereiche gelangen. Beispielsweise beschreibt die DE202011050155U1 eine mit Transportrollen ausgestattete Filtervorrichtung zur Raumluftfilterung für Sanierungsarbeiten in Gebäuden. Eine transportable bzw. mobile Filtervorrichtung zur Filterung eines Farbnebels ist beispielsweise aus der DE202014010481U1 bekannt.

Eine Aufgabe der Erfindung besteht darin, ein tragbares Luftreinigungssystem zur Anwendung im handwerklichen Bereich bereitzustellen. Insbesondere soll das tragbare Luftreinigungssystem zum Umluftbetrieb in geschlossenen Räumen geeignet sein. Vorzugsweise soll zudem ein einfacher Transport und schneller Auf- und Abbau ermöglicht werden.

Die Aufgabe wird gelöst durch ein tragbares Luftreinigungssystem nach Anspruch 1. Das tragbare Luftreinigungssystem verfügt über eine durchströmte Fläche des Lufteinlass, die kleiner ist als eine durchströmte Fläche des Luftauslass. Dadurch kann die Geschwindigkeit der aus dem Luftauslass austretenden Luft reduziert werden, so dass kein störender Luftzug entsteht. Insbesondere kann auf diese Weise eine maximale Strömungsgeschwindigkeit am Luftauslass, auch als Ausströmgeschwindigkeit bezeichnet, von beispielsweise einem Meter pro Sekunde erzielt werden, ohne dabei den Luftdurchsatz aufgrund der relativ geringen Ausströmgeschwindigkeit begrenzen zu müssen. Dies ist vor allem bei Anwendungen, die auf eine Filterung der Raumluft durch Umwälzung ausgelegt sind, ein großer Vorteil. In dem Raum anwesende Personen werden auf diese Weise nicht durch hohe Ausströmgeschwindigkeiten beeinträchtigt. Zudem wird eine unnötige Aufwirbelung von Staub und Schmutz vermieden. Die Flächen de Lufteinlass und des Luftauslass meinen insbesondere die von der Luft durchströmten Flächen. Die durchströmte Fläche kann aus mehreren Teilflächen, die durch eine Gitterstruktur voneinander abgetrennt sind, gebildet sein. Diese können so ausgebildet sein, dass die eine besonders gleichförmige und/oder diffuse Strömung aus dem Luftauslass erzielt wird.

Vorteilhafterweise ist die durchströmte Fläche des Luftauslass mindestens 20%, bevorzugt mindestens 50%, besonders bevorzugt mindestens 100% größer als die durchströmte Fläche des Lufteinlass.

Die Seitenwände des Gehäuses begrenzen den Aufnahmeraum, insbesondere den ersten Aufnahmeraum, jeweils zumindest bereichsweise zu einer Seite des Gehäuses. Innerhalb des Gehäuses wird der Aufnahmeraum, insbesondere der erste Aufnahmeraum, durch den Strömungskanal einfassende Wände begrenzt. Der Strömungskanal ist also in dem Aufnahmeraum aufgenommen, aber nicht Teil des Aufnahmeraums.

Die Seitenwände umfassen seitliche Seitenwandabschnitte, einen hinteren Seitenwandabschnitt und einen vorderen Seitenwandabschnitt. Die seitlichen Seitenwandabschnitte erstrecken sich zwischen dem hinteren Seitenwandabschnitt und dem vorderen Seitenwandabschnitt. Als seitliche Seitenwandabschnitte werden die (seitlichen) Schmalseiten des Gehäuses verstanden, wohingegen der hintere und der vordere Seitenwandabschnitt diejenigen Seiten sind, die jeweils größer sind als die seitlichen Seitenwandabschnitte. Eine horizontale Erstreckung des Gehäuses entlang eines seitlichen Seitenwandabschnitts ist also geringer als eine horizontale Erstreckung entlang des hinteren oder des vorderen Seitenwandabschnitts. Eine Vorderseite wird also zumindest teilweise von dem vorderen Seitenwandabschnitt, eine Rückseite zumindest teilweise von dem hinteren Seitenwandabschnitt gebildet.

Die erste Seitenwand ist vorteilhafterweise eine von der zweiten Seitenwand verschiedene Seitenwand des Gehäuses.

Der Strömungskanal ist zumindest in einem axialen Abschnitt entlang der Rotationsachse R radial außen von einer Strömungskanalstruktur 42 begrenzt. Die Strömungskanalstruktur kann beispielsweise einen Sammler, einen Diffusor und/oder ein Strömungsleitelement umfassen.

Das Gehäuse kann vorteilhafterweise als stapelbare Transportkiste, insbesondere als Systemkiste, ausgeführt sein. Die horizontalen Abmessungen einer Systemkiste sind fest vorgegeben, damit die Systemkiste kompatibel zu anderen Systemkisten des gleichen Systems ist.

Um das tragbare Luftreinigungssystem derart auszugestalten, dass es an eine andere Systemkiste ankoppelbar ist, muss das tragbare Luftreinigungssystem gemäß den horizontalen Abmessungen - also dem Grundriss - der anderen Systemkiste dimensioniert sein. Eine Systemkiste ist also dadurch gekennzeichnet, dass sie in zumindest zwei Dimensionen, beispielsweise Länge und Breite, die gleichen Abmessungen hat wie eine andere Transportkiste aus dem gleichen System und mit dieser stapelbar und vertikal zugfest koppelbar ist.

Erfindungsgemäß kann es vorgesehen sein, dass der Lufteinlass und der Luftauslass des tragbaren Luftreinigungssystem auf gegenüberliegenden Seitenwänden des Gehäuses angeordnet sind. Zusätzlich oder alternativ kann es vorgesehen sein, dass die erste Seitenwand einer der zweiten Seitenwände in Richtung der Rotationsachse gegenüberliegend angeordnet ist. Zusätzlich oder alternativ kann es vorgesehen sein, dass der Luftauslass oder ein Abschnitt des Luftauslasses auf einer der ersten Seitenwand, vorzugsweise in Richtung der Rotationsachse, gegenüberliegenden Seitenwand angeordnet ist. Auf diese Weise ist es möglich das tragbare Luftreinigungssystem auch zu betreiben, wenn dieses einen Teil eines Stapels, beispielsweise von Systemkisten, bildet.

Eine erfindungsgemäße Variante sieht vor, dass der Luftauslass zumindest zwei Luftauslassabschnitte aufweist, die an zumindest zwei verschiedenen Seitenwänden, insbesondere von der ersten Seitenwand verschiedenen Seitenwänden, angeordnet sind, wobei die zumindest zwei Luftauslassabschnitte an benachbarten Seitenwänden und/oder gegenüberliegenden Seitenwänden angeordnet sind. Auf diese Weise kann die durchströmte Fläche des Luftauslass maximiert werden, ohne die Abmessungen des Gehäuses ändern zu müssen. Dies ist insbesondere im Hinblick auf eine einfache Transportierbarkeit und die Unterbringung in einen Stapel von Systemkisten von Vorteil.

Eine besonders bevorzugte erfindungsgemäße Variante sieht vor, dass die zumindest zwei Luftauslassabschnitte an drei Seitenwänden angeordnet sind, die insbesondere von der ersten Seitenwand verschieden sind. Somit kann die Fläche des Luftauslass maximiert werden, da der Luftauslass sich zumindest bereichsweise über drei der vier Seitenwände des Gehäuses erstreckt. Zudem entsteht so auch ein nicht gerichteter und somit diffuser Luftstrom der aus dem Luftauslass austretenden Luft, was zu einer angenehme Arbeitsumgebung beträgt.

Der Lüfter umfasst beispielsweise einen Impeller, der von einem Motor angetrieben wird, wobei der Impeller einen Impellereinlass zur Ansaugung von Luft und einen Impellerauslass zum Abgeben der angesaugten Luft aufweist.

Als Lüfter kann beispielsweise ein Radiallüfter verwendet werden, dessen Impellerauslass quer zur Rotationsachse orientiert ist. In diesem Fall ist es besonders vorteilhaft, dass der Luftauslass oder einer der Luftauslassabschnitte durch zumindest einen radialen Luftauslass gebildet ist, der an zumindest einer sich in Richtung der Rotationsachse erstreckenden Seitenwand angeordnet ist. Besonders vorteilhaft ist es, wenn der radiale Luftauslass zwei Luftauslassabschnitte aufweist, die auf gegenüberliegenden Seiten, beispielsweise an zur ersten Seitenwand benachbart angeordneten Seitenwänden angeordnet ist.

Vorteilhafterweise ist der radiale Luftauslass in einem der ersten Seitenwand abgewandten Seitenwandabschnitt der zur ersten Seitenwand benachbart angeordneten Seitenwand oder Seitenwänden angeordnet, so dass eine direkte Ausströmung aus dem Radiallüfter in Richtung der radialen Luftauslässe erfolgen kann.

Vorteilhafterweise ist der Impellerauslass in Richtung Entlang der Rotationsachse vollständig vom radialen Luftauslass überdeckt und/oder der Impellerauslass ist in vertikaler Richtung vollständig vom radialen Luftauslass überdeckt. Somit kann die aus den Impellerauslass ausströmende Luft zumindest teilweise ohne weitere Strömungsumlenkung aus den radialen Luftauslässen ausströmen.

Vorteilhafterweise ist der Lüfter in dem Strömungskanal stromab des Luftfilters, insbesondere des ersten und des zweiten Luftfilters, angeordnet.

Zusätzlich kann ebenso ein axialer Luftauslass vorgesehen sein, der sich quer zur Rotationsachse des Lüfters erstreckt und dazu dient die durchströmte Fläche des Luftauslass zu vergrößern. Vorteilhafterweise ist der axialer Luftauslass gegenüber der ersten Seitenwand und/oder dem Lufteinlass angeordnet. Der Radiallüfter die Luft also aufgrund der geringen Strömungsumlenkung mit besonders geringen Druckverlusten ansaugen und wieder ausblasen.

Besonders bevorzugt ist vorgesehen, dass eine Hauptströmungsrichtung des in dem Gehäuse angeordneten Strömungskanals entlang der längeren der beiden horizontalen Abmessungen des Gehäuses verläuft.

Besonders bevorzugt ist die erste Seitenwand an einer der seitlichen Seitenwandabschnitte angeordnet, die zweiten Seitenwände umfassen den der ersten Seitenwand gegenüberliegenden seitlichen Seitenwandabschnitt, den vorderen Seitenwandabschnitt und den hinteren Seitenwandabschnitt und/oder die Rotationsachse des Lüfters erstreckt sich entlang des vorderen Seitenwandabschnitts und/oder des hinteren Seitenwandabschnitts.

Weiterhin kann in dem Gehäuse ein zweiter, von dem ersten Aufnahmeraum und dem Strömungskanal verschiedener, Aufnahmeraum vorgesehen sein. In einer Variante sind der erste und der zweite Aufnahmeraum voneinander räumlich getrennt, beispielsweise über eine Trennwand, insbesondere einen Zwischenboden. Vorteilhafterweise ist der erste Aufnahmeraum gegenüber dem zweiten Aufnahmeraum abgedichtet, insbesondere luftdicht abgedichtet. Beispielsweise kann in dem Gehäuse der Zwischenboden vorgesehen sein, der den Aufnahmeraum in den ersten Aufnahmeraum zur Aufnahme der Luftfiltereinheit und einen zweiten Aufnahmeraum unterteilt. Insbesondere ist die Luftfiltereinheit vollständig in dem ersten Aufnahmeraum aufgenommen.

Der Zwischenboden kann parallel zur Bodenwand und/oder zur Deckenwand ausgerichtet sein. In einer vorteilhaften Ausgestaltung des Gehäuses ist der Zwischenboden integral mit dem Gehäuse ausgebildet.

Vorteilhafterweise weist das Gehäuse einen Zugang auf, über den zumindest ein Teil des Aufnahmeraums, beispielsweise der erste oder der zweite Aufnahmeraum zugänglich ist, wobei der Zugang vorzugsweise einen Deckel und/oder eine Schublade umfasst.

Der Deckel verschließt eine von den, insbesondere von allen, Seitenwänden berandete Gehäuseöffnung und/oder verschließt den Aufnahmeraum, insbesondere den zweiten Aufnahmeraum nach oben. Der Deckel kann beispielsweise einen von der Deckenwand senkrecht abstehenden Kragen aufweisen, so dass ein Teilvolumen des Aufnahmeraums, insbesondere des zweiten Aufnahmeraums, von dem Deckel umgeben ist.

In einer Variante umfasst der Deckel die Deckenwand zumindest bereichsweise, vorteilhafterweise vollständig. Der Aufnahmeraum, insbesondere der zweite Aufnahmeraum, kann beispielsweise mittels des Deckels von oben oder nach oben hin verschlossen werden, so dass der Deckel in seiner Geschlossenstellung den zweiten Aufnahmeraum nach oben begrenzt. Der Deckel öffnet somit nach oben und/oder ist mittels zumindest eines Deckelscharniers drehbar und/oder klappbar an zumindest einer der Seitenwände gelagert.

Die Schublade, wenn vorhanden, ist aus einer Schubladenöffnung der Seitenwände ausziehbar. Vorteilhafterweise bildet eine Schubladenwand einen Teil der Seitenwand, so dass die Schublade die Schubladenöffnung im eingeschobenen Zustand der Schublade verschließt.

In der Variante, in der in dem Gehäuse der Zwischenboden angeordnet ist, ist der zweite Aufnahmeraum durch den geöffneten Zugang, insbesondere den Deckel und/oder die Schublade zugänglich und/oder nur bei geöffnetem Zugang zugänglich. In anderen Worten ist der erste Aufnahmeraum nicht über den Zugang zugänglich.

Die Schublade bildet also einen Teil einer der Seitenwände, um den zweiten Aufnahmeraum zu verschließen, wobei die Schublade vorzugsweise aus dem zweiten Aufnahmeraum ausziehbar und/oder in den zweiten Aufnahmeraum einschiebbar ist.

In einer Variante bildet die Schublade einen Wandbereich der Seitenwand.

Bei der nachfolgend erläuterten Ausführungsform des tragbaren Luftreinigungssystems handelt es sich um eine bevorzugte Ausführungsform der vorgenannten tragbaren Luftreinigungssystems, aber auch im Zusammenhang mit den eingangs genannten Merkmalen oder den Merkmalen des Oberbegriffs des Anspruchs 1 um eine an sich eigenständige Erfindung.

Das Gehäuse des tragbaren Luftreinigungssystems kann ein erstes Gehäuseteil und ein zweites Gehäuseteil aufweisen, die zusammen den Aufnahmeraum, insbesondere den ersten Aufnahmeraum, in sich aufnehmen und/oder diesen umgeben. Das erste Gehäuseteil und das zweite Gehäuseteil sind somit entlang einer Gehäuse-Trennung aneinander angeordnet, um zwei den (ersten) Aufnahmeraum umgebende Gehäuseschalen zu bilden. Auf diese Weise kann die Luftfiltereinheit bei der Montage leicht in eines der Gehäuseteile eingebaut und die beiden Gehäuseteile anschließend miteinander verbunden werden. Dies ist insbesondere dann von Vorteil, wenn das Gehäuse den zweiten Aufnahmeraum umfasst.

In einer erfindungsgemäßen Variante trennt die die Gehäuse-Trennung das Gehäuse in ein erstes Gehäuseunterteil und ein zweites Gehäuseunterteil. Somit kann das erste Gehäuseteil das erste Gehäuseunterteil und das zweite Gehäuseteil das zweite Gehäuseunterteil sein. In diesem Fall umfasst das erste Gehäuseunterteil die Bodenwand und das zweite Gehäuseunterteil ist an der der Bodenwand abgewandten Seite des ersten Gehäuseunterteils angeordnet. In der Variante, in der das Gehäuse den Zwischenboden aufweist, umfasst das zweite Gehäuseunterteil also den Zwischenboden. Beispielsweise ist die Schublade dann in dem zweiten Gehäuseunterteil angeordnet und/oder der Deckel mittels zumindest eines Deckelscharniers drehbar und/oder klappbar an dem zweiten Gehäuseunterteil gelagert.

In einer alternativen erfindungsgemäßen Variante kann es vorgesehen sein, dass die Gehäuse-Trennung sich in vertikaler Richtung durch das Gehäuse erstreckt, so dass die ersten und zweiten Gehäuseteile jeweils den Zwischenboden und die Bodenwand teilweise umfassen. Somit bilden das erste und das zweite Gehäuseteil ein linkes und ein rechtes Gehäuseteil. Das linke und das rechte Gehäuseteil umgeben den zweiten Aufnahmeraum zumindest teilweise. Der zweite Aufnahmeraum kann beispielsweise mittels des Deckels von oben oder nach oben hin verschlossen werden, so dass der Deckel in seiner Geschlossenstellung den zweiten Aufnahmeraum zusammen mit dem linken und dem rechten Gehäuseteil begrenzt.

Erfindungsgemäß kann es vorgesehen sein, dass in dem Gehäuse eine Tragstruktur vorgesehen ist, die mit dem Gehäuse strukturell verbunden und geeignet ist die Luftfiltereinheit zu tragen. Insbesondere ist die Tragstruktur eine mit dem Gehäuse verbundene, aber nicht mit dem Gehäuse integrale Struktur.

Vorteilhafterweise verbindet die Tragstruktur das erste und das zweite Gehäuseteil mechanisch miteinander oder das erste und das zweite Gehäuseteil werden mittels der Tragstruktur aneinander festgelegt. Insbesondere ist die Tragstruktur mit dem ersten Gehäuseteil und/oder dem zweiten Gehäuseteil lösbar verbunden, beispielsweise verschraubt.

Vorteilhafterweise nimmt die Tragstruktur die Strömungskanalstruktur auf oder die Strömungskanalstruktur bildet die Tragstruktur.

In einer Variante umfasst das Luftreinigungssystem ein Netzkabel, das wahlweise durch einen in dem Gehäuse, insbesondere in der Seitenwand, angeordneten Durchbruch aus einem Kabelaufnahmeraum herausführbar ist und/oder im Betrieb durch den Durchbruch geführt ist und beim Transport in dem Kabelaufnahmeraum aufgenommen ist oder in dem Kabelaufnahmeraum aufnehmbar ist. Der Durchbruch ist vorteilhafterweise im Bereich eines durch den Zugang gebildeten Trennbereichs angeordnet.

Der Kabelaufnahmeraum kann innerhalb des zweiten Aufnahmeraums angeordnet sein oder von diesem umfasst werden. Der Kabelaufnahmeraum kann beispielsweise von der Schublade gebildet werden.

Beispielsweise ist der Durchbruch im Bereich der von dem Deckel verschließbaren Gehäuseöffnung, also im Trennbereich zwischen dem Deckel und den Seitenwänden angeordnet. Der Durchbruch ist also durch eine der Seitenwände und/oder den Deckel begrenzt.

Beispielsweise kann der Durchbruch in der Schubladenwand angeordnet sein.

Das Luftreinigungssystem kann weiterhin eine Kopplungsschnittstelle aufweisen, mit der eine lösbare, vertikal zugfeste Kopplung zu einer oder zu mehreren Systemkisten herstellbar ist, so dass das Luftreinigungssystem zusammen mit der einen oder den mehreren Systemkisten einen vertikalen Stapel bilden kann. Die Kopplungsschnittstelle ist insbesondere eine mechanische Kopplungsschnittstelle.

Die Kopplungsschnittstelle umfasst exemplarisch eine untere Kopplungsschnittstelle, die eine untere lösbare, vertikal zugfeste Kopplung zu einer unteren Systemkiste bereitstellt, und/oder eine obere Kopplungsschnittstelle umfasst, die eine obere lösbare, vertikal zugfeste Kopplung zu einer oberen Systemkiste bereitstellt.

Die Kopplungsschnittstelle umfasst zweckmäßigerweise mehrere Kopplungsabschnitte. Die Kopplungsabschnitte umfassen zweckmäßigerweise einen oder mehrere feststehende Kopplungsabschnitte, beispielsweise eine oder mehrere Kopplungsvertiefungen und/oder eine oder mehrere Kopplungsvorsprünge. Zweckmäßigerweise umfasst die Kopplungsschnittstelle ferner wenigstens einen (exemplarisch genau einen) beweglich gelagerten Kopplungsabschnitt, beispielsweise einen Kopplungsriegel oder eine Kopplungsklinke. Der Kopplungsriegel ist insbesondere als Drehriegel, exemplarisch als T-förmiger Drehriegel, ausgeführt.

Die obere Kopplungsschnittstelle umfasst exemplarisch mehrere obere Kopplungsabschnitte, die insbesondere an der Deckenwand angeordnet sind. Exemplarisch umfassen die oberen Kopplungsabschnitte Kopplungsvertiefungen, die insbesondere an der Deckenwand angeordnet sind. Zweckmäßigerweise umfassen die oberen Kopplungsabschnitte einen Drehriegel, der insbesondere an oben einer der Seitenwände angeordnet ist.

Die untere Kopplungsschnittstelle umfasst exemplarisch mehrere untere Kopplungsabschnitte, die insbesondere an der Bodenwand angeordnet sind. Exemplarisch umfassen die unteren Kopplungsabschnitte untere Kopplungsvorsprünge, die insbesondere an der Bodenwand angeordnet sind und beispielsweise als Standfüße ausgeführt sind. Zweckmäßigerweise umfassen die unteren Kopplungsabschnitte einen vorderen Kopplungsvorsprung, der insbesondere an der gleichen Seitenwand wie der Drehriegel angeordnet ist.

Die Kopplungsschnittstelle ist zweckmäßigerweise derart ausgeführt, dass sie mit einer identischen Kopplungsschnittstelle koppelbar ist; insbesondere sind die unteren Kopplungsabschnitte der Kopplungsschnittstelle mit oberen Kopplungsabschnitten einer identischen Kopplungsschnittstelle koppelbar. Beispielsweise können die unteren Kopplungsvorsprünge der Kopplungsschnittstelle in Eingriff mit Kopplungsvertiefungen einer identischen Kopplungsschnittstelle gebracht werden und/oder der vordere Kopplungsvorsprung kann in Eingriff mit einem Drehriegel der identischen Kopplungsschnittstelle gebracht werden und/oder der Drehriegel kann in Eingriff mit einem vorderen Kopplungsvorsprung der identischen Kopplungsschnittstelle gebracht werden.

Außerdem ist die Erfindung auf eine Stapelanordnung, umfassend ein tragbares Luftreinigungssystem sowie eine untere Systemkiste und/oder eine obere Systemkiste gerichtet, wobei das Luftreinigungssystem auf die untere Systemkiste aufgesetzt ist und/oder die obere Systemkiste auf das Luftreinigungssystem aufgesetzt ist, so dass das Luftreinigungssystem, die untere Systemkiste und/oder die obere Systemkiste zusammen einen vertikalen Stapel bilden, und wobei eine Kopplungsschnittstelle eine untere Kopplungsschnittstelle umfasst, die eine untere lösbare, vertikal zugfeste Kopplung zu der unteren Systemkiste bereitstellt, und/oder eine obere Kopplungsschnittstelle umfasst, die eine obere lösbare, vertikal zugfeste Kopplung zu der oberen Systemkiste bereitstellt.

Weitere exemplarische Details sowie beispielhafte Ausführungsformen werden nachstehend unter Bezugnahme auf die Figuren erläutert. Dabei zeigt
Figur 1 eine erfindungsgemäßes tragbares Luftreinigungssystem in Ansicht schräg von oben vorne,
Figur 2 das Luftreinigungssystem aus Figur 1 schräg von oben hinten,
Figur 3 das Luftreinigungssystem aus Figur 1 schräg von unten vorne,
Figur 4 das Luftreinigungssystem aus Figur 1 in einer Explosionsdarstellung
Figur 5 einen Schnitt längs durch das Luftreinigungssystem gemäß Figur 1,
Figur 6 das Luftreinigungssystem aus Figur 1 mit einer alternativen Motoraufnahme,
Figur 7 ein erfindungsgemäßes tragbares Luftreinigungssystem in einer Variante mit Axiallüfter,
Figur 8 ein erfindungsgemäßes Luftreinigungssystems mit geöffnetem Deckel,
Figur 9 ein erfindungsgemäßes Luftreinigungssystem mit einem Kabelaufnahmeraum,
Figur 10 ein erfindungsgemäßes Luftreinigungssystem mit einer alternativen Führung des Netzkabels aus dem Kabelaufnahmeraum heraus,
Figur 11 ein Luftreinigungssystem mit einem Kabelaufnahmeraum gemäß einer Ausführung mit Schublade,
Figur 12 eine Stapelanordnung, umfassend das Luftreinigungssystem aus Figur 1 sowie eine untere Systemkiste und eine obere Systemkiste,
Figur 13 einen Schnitt durch einen Kopplungsabschnitt einer Kopplungsschnittstelle,
Figur 14 einen Schnitt durch einen Drehriegel der Kopplungsschnittstelle im gekoppelten Zustand,
Figur 15 ein erfindungsgemäßes Luftreinigungssystem mit geöffnetem Filterzugang,
Figur 16 ein erfindungsgemäßes Luftreinigungssystem mit einem geöffneten alternativen Filterzugang,

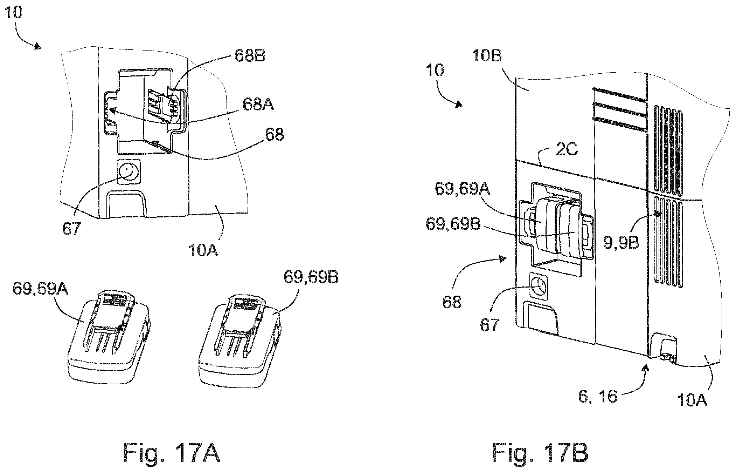

Figur 17A, B eine Akkuschnittstelle eines tragbaren Luftreinigungssystems,
Figur 18 ein erfindungsgemäßes Luftreinigungssystem gemäß einer alternativen Ausführungsform von schräg links vorne,
Figur 19 das Luftreinigungssystem gemäß Figur 17 von schräg recht vorne.

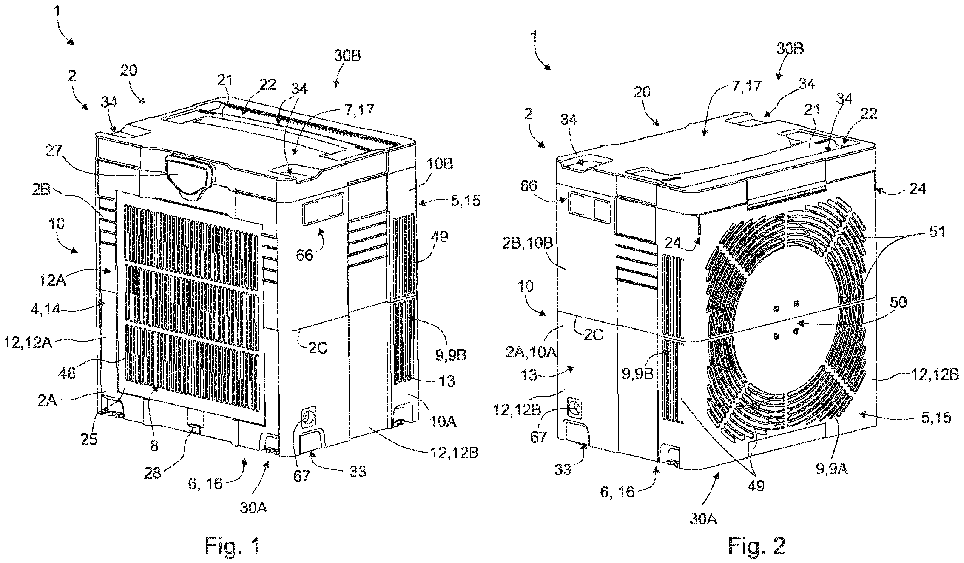

Die Figuren 1 bis 6 zeigen ein erstes Ausführungsbeispiel eines tragbaren Luftreinigungssystems 1, dessen Gehäuse 2 als Systemkiste ausgeführt ist. Das Gehäuse weist Seitenwände 12 auf, die sich in vertikaler Richtung zwischen einer Unterseite 6 und einer Oberseite 7 des Gehäuses 2 erstrecken. Die Unterseite 6 des Gehäuses 2 wird von einer Bodenwand 16 und die Oberseite 7 von einer Deckenwand 17 gebildet, die zusammen mit den Seitenwänden 12 einen Aufnahmeraum 3 begrenzen.

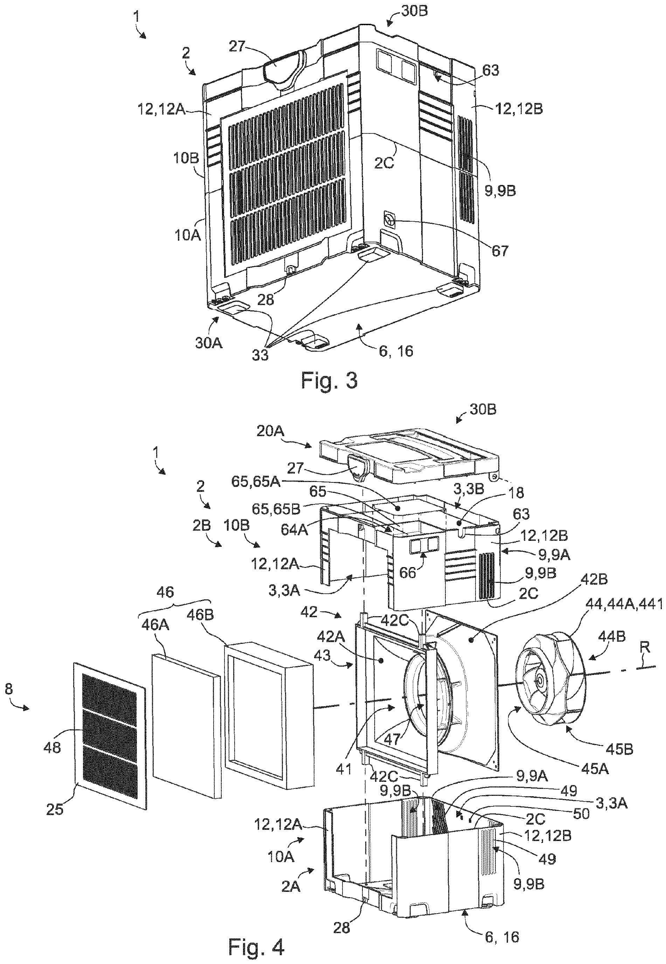

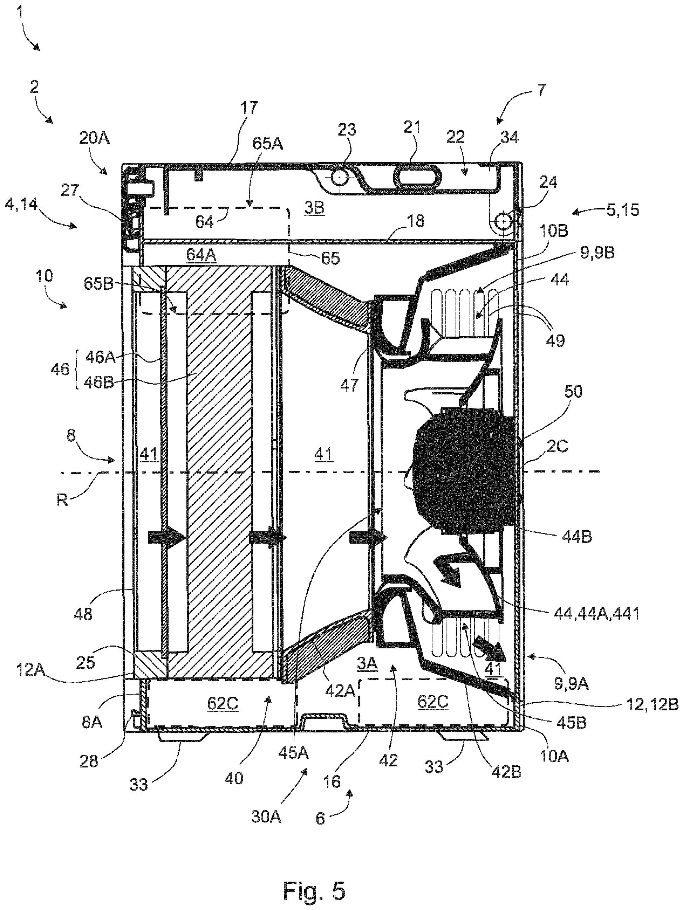

In dem Aufnahmeraum 3 ist eine Luftfiltereinheit 40 aufgenommen. Die Luftfiltereinheit weist einen Luftfilter 46 und einen um eine Rotationsachse R rotierbaren Lüfter 44 zur Erzeugung eines Luftstroms vom Lufteinlass 8 zum Luftauslass 9 auf, wie dies in Figuren 4 und 5 dargestellt ist. Der Luftfilter 46 und der Lüfter 44 sind in einem Strömungskanal 41 angeordnet, der den Luftstrom (in Figur 5 durch die schwarzen Pfeile dargestellt) führt.

Figur 5 zeigt das tragbare Luftreinigungssystem 1 in einem Längsschnitt entlang der Rotationsachse R.

An einer ersten Seitenwand 12A des Gehäuses 2 ist ein Lufteinlass 8 angeordnet. Ein Luftauslass 9 ist an zweiten Seitenwänden 12B des Gehäuses 2 angeordnet.

Der Lufteinlass 8 umfasst ein grobmaschiges Einlassgitter 48, welches beispielsweise aus dem gleichen Material geformt ist wie das Gehäuse 2. Ebenso umfasst der Luftauslass 9 ein grobmaschiges Auslassgitter 49, welches beispielsweise aus dem gleichen Material geformt ist wie das Gehäuse 2.

In dem vorliegenden Fall erstrecken sich die zweiten Seitenwände 12B über drei Seiten des Gehäuses 2, welche seitliche Seitenwandabschnitte 13 und einen hinteren Seitenwandabschnitt 15 umfassen. Der vordere Seitenwandabschnitt 14 ist gemäß dem vorliegenden Beispiel die erste Seitenwand 12A, während die zweiten Seitenwände 12B die seitlichen Seitenwandabschnitte 13 und den hinteren Seitenwandabschnitt 15 umfassen.

Der Luftauslass 9 erstreckt sich ebenso über drei Seiten des Gehäuses 2, nämlich über die zweiten Seitenwände 12B, wie Figuren 1 und 2 darstellen. Der Luftauslass 9 umfasst vorliegend drei Luftauslassabschnitte, die von einem axialen Luftauslass 9A und zwei radialen Luftauslässen 9B gebildet werden. Die radialen Luftauslässe 9B sind auf einander gegenüberliegenden Seiten des Gehäuses 2 angeordnet. Der axiale Luftauslass 9A ist gegenüber dem Lufteinlass 8, also gegenüber der ersten Seitenwand 12A, angeordnet.

Der Lufteinlass 8 erstreckt sich über einen Großteil der ersten Seitenwand 12A, also dem vorderen Seitenwandabschnitt 14, im vorliegenden Beispiel über mehr als 50 Prozent der ersten Seitenfläche 12A.

Der axiale Luftauslass 9A erstreckt sich über einen Großteil der der ersten Seitenwand 12A gegenüberliegenden Seitenwand, also dem hinteren Seitenwandabschnitt 15.

Die radialen Luftauslässe 9B sind an der dem axialen Luftauslass 9A zugewandten Hälfte der sich zwischen Lufteinlass 8 und axialem Luftauslass 9A erstreckenden Seitenwände 12 angeordnet.

Die durchströmte Fläche des Luftauslasses 9 ist vorliegend ca. 20% größer als die Durchströmte Fläche des Lufteinlass 8. Zudem bewirkt die Anordnung des Luftauslasses 9 auf drei verschiedenen Seiten des Gehäuses 2, dass eine Abströmung aus dem Luftauslass 9 in drei Richtungen des Raumes eine diffuse Strömung mit geringer Ausströmgeschwindigkeit erzeugt. Dies ist insbesondere bei bodennahem Betrieb des Luftreinigungssystems vor Vorteil, da Staub und Verschmutzungen nicht unnötig aufgewirbelt werden.

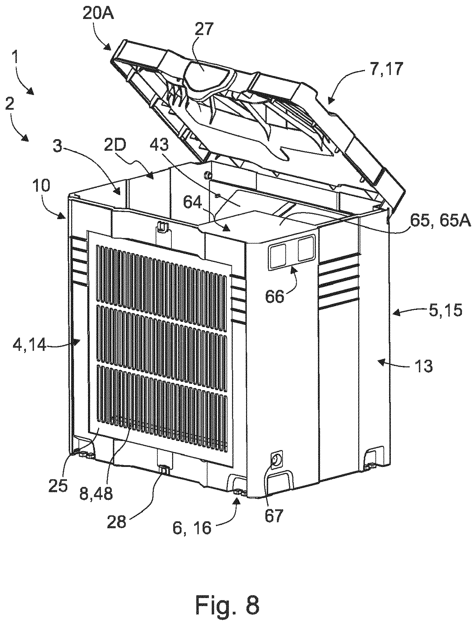

Figuren 1 und 2 zeigen ebenfalls, dass das Gehäuse 2 einen Zugang 20 in Gestalt eines Deckels 20A aufweist. In einer Offenstellung des Zugangs 20 ist der Aufnahmeraum 3 für einen Nutzer von oben durch eine Gehäuseöffnung 2D zugänglich, wie dies zum Beispiel in Figur 8 verdeutlicht wird. In einer Geschlossenstellung des Zugangs 20 ist der Aufnahmeraum 3 für einen Nutzer nicht zugänglich. Der Deckel 20A ist mittels zweier Deckelscharniere 24 an einer der Seitenwände 12, hier exemplarisch an der hinteren Seitenwand 15, klappbar gelagert und ist mittels eines, exemplarisch an der vorderen Seitenwand 14 angeordneten, Drehriegels 27 in der Geschlossenstellung arretierbar oder abschließbar.

An der Deckenwand 17 ist ein Tragegriff 21 angeordnet. Der Tragegriff 21 ist im Eingeklappten Zustand in eine Tragegriffaufnahme 22 der Deckenwand 17 eingelassen, sodass die Oberseite des Gehäuses 2 eine Auflagefläche bildet.

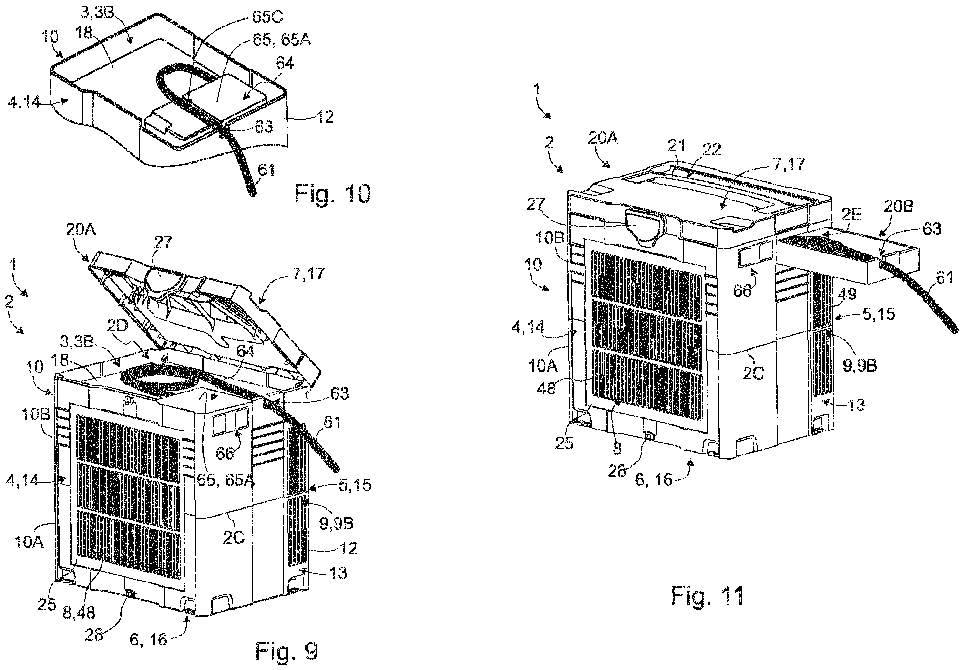

In dem Gehäuse 2 ist exemplarisch ein Zwischenboden 18 vorgesehen, wie in Figuren 4, 5, 9 und 10 dargestellt, der den Aufnahmeraum 3 in einen ersten Aufnahmeraum 3A zur Aufnahme der Luftfiltereinheit 40 und einen zweiten Aufnahmeraum 3B unterteilt. Der Zwischenboden 18 ist integral mit dem Gehäuse 2 ausgebildet. Wie Figuren 9 und 10 zeigen, dient der zweite Aufnahmeraum 3B als Kabelaufnahmeraum.

Bei der nachfolgend erläuterten Ausführungsform des tragbaren Luftreinigungssystems handelt es sich um eine bevorzugte Ausführungsform der vorgenannten tragbaren Luftreinigungssystems, aber auch im Zusammenhang mit den eingangs genannten Merkmalen oder den Merkmalen des Oberbegriffs des Anspruchs 1 um eine an sich eigenständige Erfindung.

In dem Aufnahmeraum 3 ist eine einen Einhausungs-Aufnahmeraum 64A umschließende Einhausung 64 angeordnet, wobei in dem Einhausungs-Aufnahmeraum 64A zumindest eine elektronische Komponente zur Steuerung und Regelung des Luftreinigungssystems 1 angeordnet ist. Exemplarisch ist die Einhausung 64 zumindest teilweise integral mit dem Gehäuse 2 und/oder mit einer der Seitenwände 12 und/oder mit dem Zwischenboden 18 ausgebildet, wie beispielsweise in Figuren 3, 8 und 9 gezeigt.

Beispielsweise ist die Einhausung 64 im Bereich des Zwischenbodens 18 angeordnet und/oder der Zwischenboden 18 von der Einhausung 64 durchsetzt, so dass sich der Einhausungs-Aufnahmeraum 64A sowohl in den ersten Aufnahmeraum 3A, als auch in den zweiten Aufnahmeraum 3B erstreckt, wie beispielsweise in Figur 5 dargestellt. Alternativ kann es ebenso vorgesehen sein, dass der Zwischenboden 18 den Einhausungs-Aufnahmeraum 64A begrenzt und eine Einhausungswand 65 bildet - wie in Figuren 4, 9 und 10 dargestellt -, beispielsweise eine Einhausung-Decke 65A oder einen Einhausungs-Boden 65B.

Die Einhausungs-Decke 65A ist vorteilhafterweise lösbar mit dem Gehäuseunterteil 10 verbunden, beispielsweise mittels einer in Figur 4 angedeuteten Schraubverbindung, um einen Einhausungs-Deckel zu bilden.

Die in Figuren 4 und 9 gezeigte Einhausung 64 weist zwei integral mit den Seitenwänden 12 ausgebildete und zwei diesen gegenüberliegende Einhausungswände 65 auf. Die Einhausungswände 65 erstrecken sich somit in vertikaler Richtung vom Zwischenboden 18 in den zweiten Aufnahmeraum 3B um den Einhausungs-Aufnahmeraum 64A zusammen mit der als Einhausungs-Deckel ausgebildeten Einhausungs-Decke 65A zu begrenzen.

Bei der in Figur 10 gezeigten Einhausung 64 erstreckt sich ein umlaufender Spalt zwischen den sich vertikal erstreckenden Einhausungswänden 65 der Einhausung 64 und den Seitenwänden 12.

Bei der in Figur 8 dargestellten Variante des Luftreinigungssystems 1 weist die Einhausung 64 zwei integral mit den Seitenwänden 12 ausgebildete und zwei diesen gegenüberliegende Einhausungswände 65 auf, die zusammen mit der Einhausungs-Decke 64A und dem Einhausungs-Boden 64B den Einhausungs-Aufnahmeraum 64A begrenzen, wobei der erste Aufnahmeraum 3A über die Gehäuseöffnung 2D zugänglich ist.

Weiterhin ist eine Bedieneinheit 66 zur Bedienung des Luftreinigungssystem 1 durch einen Nutzer vorgesehen. Die Bedieneinheit 66 umfasst Bedienelemente zur Bediendung des Luftreinigungssystems 1 durch einen Benutzer und/oder Anzeigeelemente zur Anzeige des Betriebszustands des Luftreinigungssystems 1. Die Bedieneinheit 66 ist exemplarisch an einer der Seitenwände 12 angeordnet und begrenzt den Einhausungs-Aufnahmeraum 64A zumindest bereichsweise nach außen.

Der Einhausungs-Aufnahmeraum 64A ist gegenüber seiner Umgebung und/oder dem die Einhausung 64 umgebenden Aufnahmeraum 3 abgedichtet. Vorzugsweise dichtet die Bedieneinheit 66 den Einhausungs-Aufnahmeraum 64A nach außen ab. Dies ist besonders bei Anwendungen im handwerklichen Bereich, beispielsweise auf Baustellen bedeutsam.

Das Luftreinigungssystem 1 weist eine elektrische Schnittstelle 67 zur Versorgung des Luftreinigungssystems 1 mit elektrischer Energie auf. Das Luftreinigungssystem 1 ist somit über die elektrische Schnittstelle 67 an eine Wechselspannungsquelle anschließbar.

Die die elektrische Schnittstelle 67 des in den Figuren 1 bis 3 offenbarten ersten Ausführungsbeispiels ist ein Netzkabelanschlusses 671 zum Anschluss eines Netzkabels 61 zur Versorgung des Luftreinigungssystem 1 mit einer elektrischen Spannung. Das Netzkabel 61 ist lösbar an den Netzkabelanschluss 671 anschließbar oder ankoppelbar.

In der in Figur 9 gezeigten Darstellung ist eine alternative Variante der Versorgung des Luftreinigungssystem 1 mit einer elektrischen Spannung über das Netzkabel 61 dargestellt. In anderen Worten wird eine alternative Variante der elektrischen Schnittstelle 67 verwendet bei der das Netzkabel 61 vorteilhafterweise fest, also nicht werkzeuglos lösbar, mit dem Luftreinigungssystem 1 verbunden ist. Das Netzkabel 61 wird über den Aufnahmeraum 3, insbesondere den zweiten Aufnahmeraum 3B, in den Einhausungs-Aufnahmeraum 64A geführt. Das Netzkabel 61 ist dabei durch einen Durchbruch 63 in einer der Seitenwände 12 von außen in den zweiten Aufnahmeraum 3B geführt.

In einer in Figur 10 dargestellten Variante der Einhausung 64, weist die Einhausung 64 eine Einhausungs-Ausnehmung 65C auf, die fluchtend mit dem Durchbruch 63 angeordnet ist, um das Netzkabel 61 durch die Einhausungs-Ausnehmung 65C und den Durchbruch 63 aus dem Aufnahmeraum 3 nach außen zu führen.

Die Einhausung 64 ist ausgebildet zumindest zwei Durchführungen aufzuweisen, die dazu ausgebildet sind elektrische Leiter aus dem Einhausungs-Aufnahmeraum 64A in den Aufnahmeraum 3 zu führen, wobei bevorzugt vorgesehen ist, dass eine erste Durchführung einen oder mehrere elektrische Leiter aus dem Einhausungs-Aufnahmeraum 64A in den ersten Aufnahmeraum 3A führt und eine zweite Durchführung einen oder mehrere elektrische Leiter, insbesondere das Netzkabel 61, aus dem Einhausungs-Aufnahmeraum 64A in den zweiten Aufnahmeraum 3B führt.

Das Netzkabel 61 ist während des Transports des Luftreinigungssystems 1 vollständig in dem Aufnahmeraum 3, insbesondere in dem zweiten Aufnahmeraum 3B, aufgenommen, ohne elektrisch von der Luftreinigungseinheit 1 getrennt zu sein. Dies hat den Vorteil, dass das Netzkabel 61 beim Transport fest mit dem Luftreinigungssystem 1 verbunden ist, ohne beim Transport störend über die Abmessungen des Gehäuses 2 hinauszuragen.

Figur 11 offenbart eine alternative Gestaltung des Zugangs 20 in Gestalt einer Schublade 20B, die das Netzkabel 61 während des Transports des Luftreinigungssystem 1 aufnimmt. Die Darstellung zeigt die Schublade 20B im ausgezogenen Zustand. Der Durchbruch 63 ist vorliegend in einer Schubladenwand ausgebildet, so dass das Netzkabel 61 auch im eingeschobenen Zustand der Schublade 20B aus dem Aufnahmeraum 3 herausführbar ist. Die Schubladenwand verschließt also im eingeschobenen Zustand der Schublade 20B eine Seitenwandöffnung 2E, die mit dem Aufnahmeraum 3 verbunden ist.

Das Gehäuse 2 umfasst ein Gehäuseunterteil 10, welches von den Seitenwänden 12 und der Bodenwand 16 gebildet wird. Das Gehäuseunterteil 10 weist gemäß dem vorliegenden Ausführungsbeispiel ein erstes Gehäuseunterteil 10A und ein zweites Gehäuseunterteil 10B auf, die entlang einer Gehäuse-Trennung 2C vertikal übereinander aneinander liegen. Das erste Gehäuseunterteil 10A umfasst die Bodenwand 16. Der Deckel 20A ist an dem zweiten Gehäuseunterteil 10B angeordnet.

Der Luftfilter 46 weist exemplarisch ein erstes Filterelement 46A, beispielsweise einen Grobfilter oder Vorfilter, und ein zweites Filterelement 46B, beispielsweise einen HEPA-Filter, auf, die in dem Strömungskanal hintereinander angeordnet sind, wie in Figuren 4 und 5 exemplarisch dargestellt.

Der Lüfter 44 weist einen Impeller 44A und einen den Impeller 44A antreibenden Motor 44B auf. Der Impeller 44A weist einen Impellereinlass 45A zur Ansaugung von Luft und einen Impellerauslass 45B auf. Der Lüfter 44 ist in dem vorliegenden Beispiel als Radiallüfter 441 ausgestaltet.

Der Strömungskanal 41 ist zumindest in einem Abschnitt entlang der Strömungsrichtung quer zur Strömungsrichtung von einer Strömungskanalstruktur 42 begrenzt. Die Strömungskanalstruktur 42 bildet also zumindest in einem axialen Abschnitt entlang der Rotationsachse R die den Strömungskanal 41 umgebenden Wände.

Die Strömungskanalstruktur 42 kann beispielsweise einen Sammler 42A, einen Diffusor 42B und/oder ein Strömungsleitelement 47 umfassen.

Zwischen dem Luftfilter 46 und dem Lüfter 44 ist der Sammler 42A angeordnet, der die Luft in Richtung des Impellers 44A führt. Vor dem Impeller 44A ist exemplarisch das Strömungsleitelement 47 zur Homogenisierung der Anströmung des Impellers 44A angeordnet.

Im Bereich des Impellerauslass 45B ist der Diffusor 42B angeordnet, der die aus dem Impeller 44A austretende Strömung in Richtung des Luftauslass 9 leitet.

Figur 5 verdeutlicht, dass der Impellerauslass 45B Entlang der Rotationsachse R vollständig vom radialen Luftauslass 9B überdeckt wird. Exemplarisch haben die radialen Luftauslässe 9B die gleiche axiale Erstreckung in Richtung der Rotationsachse R wie der Impellerauslass 45B.

Figur 5 verdeutlicht ebenso, dass der Impellerauslass 45B in vertikaler Richtung (also in Richtung senkrecht zur Bodenwand) vollständig vom radialen Luftauslass 9B überdeckt wird. Eine vertikale Erstreckung des radialen Luftauslass 9B ist also größer oder gleich als eine vertikale Erstreckung des Radiallüfters 441, also größer oder gleich groß wie ein Außendurchmesser des Impellerauslass 45B.

Der Impellerauslass 45B des Radiallüfters 441 ist also so angeordnet ist, dass die aus den Impellerauslass 45B ausströmende Luft ohne weitere Strömungsumlenkung aus den radialen Luftauslässen 9B ausströmen kann.

In dem gezeigten Ausführungsbeispiel ist zusätzlich zu den radialen Luftauslässen 9B ein axialer Luftauslass 9A an dem hinteren Seitenwandabschnitt 15 angeordnet.

Der Lüfter 44 ist gemäß dem in Figur 5 gezeigten Ausführungsbeispiel an der dem Lufteinlass 8 abgewandten Seitenwand 12, also dem hinteren Seitenwandabschnitt 15, befestigt.

Der Lüfter 44 ist an einer Motoraufnahme 50, vorteilhafterweise in Strömungsrichtung vor der Motoraufnahme 50, befestigt. Exemplarisch ist ein Motoraufnahmehalter 51 vorgesehen, der die Motoraufnahme 50 relativ zum Gehäuse festlegt. Der Lüfter 44 ist an der Motoraufnahme 50 oder der Seitenwand 12 lösbar, insbesondere mittels Schraubelementen, befestigt.

Vorteilhafterweise sind zumindest zwei Motoraufnahmehalter 51 vorgesehen, die sich in radialer Richtung von der Motoraufnahme 50 und/oder der Rotationsachse R nach außen erstrecken, insbesondere entlang der Gehäuse-Trennung 2C, wie dies in Figur 2 zu sehen ist.

Die Motoraufnahme 50 und/oder Motoraufnahmehalter 51 integral mit dem Gehäuse 2 ausgebildet ist/sind und/oder die Motoraufnahme 50 und/oder der Motoraufnahmehalter 51 von einer dem Lufteinlass 8 abgewandten Seitenwand 12 gebildet wird/werden.

In dem Ausführungsbeispiel gemäß Figur 4 und 5 bildet die der ersten Seitenwand gegenüberliegende Seitenwand die Motoraufnahme 50 und die Motoraufnahmehalter 51. In anderen Worten sind die Motorausnahme 50 und die Motoraufnahmehalter 51 integral mit der zweiten Seitenwand 12B ausgebildet.

Gemäß einer vorteilhaften Ausgestaltung verläuft die Gehäuse-Trennung 2C, wie in Figur 2 exemplarisch gezeigt, durch zumindest einen der Motoraufnahmehalter 51.

Der Luftauslass 9, insbesondere der axiale Luftauslass 9A, ist radial außen um die Motoraufnahme 50 herum angeordnet, so dass die Motoraufnahme 50 einen Befestigungsabschnitt in der, insbesondere der ersten Seitenwand 12A gegenüberliegenden, Seitenwand 12 ausbildet und/oder die Motoraufnahme 50 einen zentralen Abschnitt in dem Luftauslass 9 bildet.

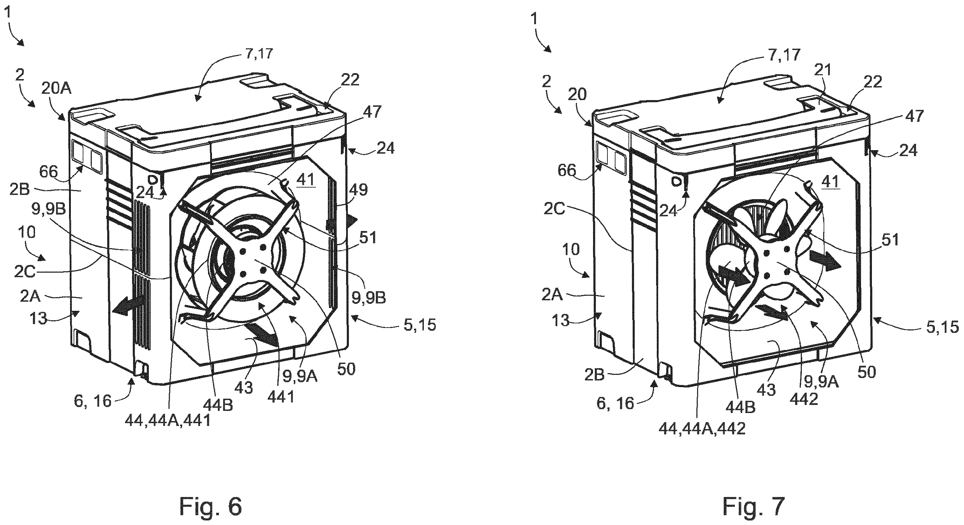

In einer alternativen, in Figur 6 dargestellten, Ausgestaltungsform ist die Motoraufnahme 50 und die Motoraufnahmehalter 51 von dem Gehäuse 2 separate Bauteile. Exemplarisch sind die Motoraufnahmehalter 51 integral mit der Motoraufnahme 50, beispielsweise aus einem Metallblech, gebildet.

Gemäß der in Figur 6 dargestellten Ausführungsform ist der Motoraufnahmehalter 51 an der Strömungskanalstruktur 42, insbesondere dem Strömungsleitelement 47 festgelegt. Somit kann der Lüfter 44 bei der Montage auf Grund der kürzeren Toleranzkette genauer gegenüber der Strömungskanalstruktur 42 ausgerichtet werden. Dies wirkt sich strömungsmechanisch positiv aus.

Vorliegend ist der Motoraufnahmehalter 51 radial außen an dem Strömungselement 47 angeschraubt.

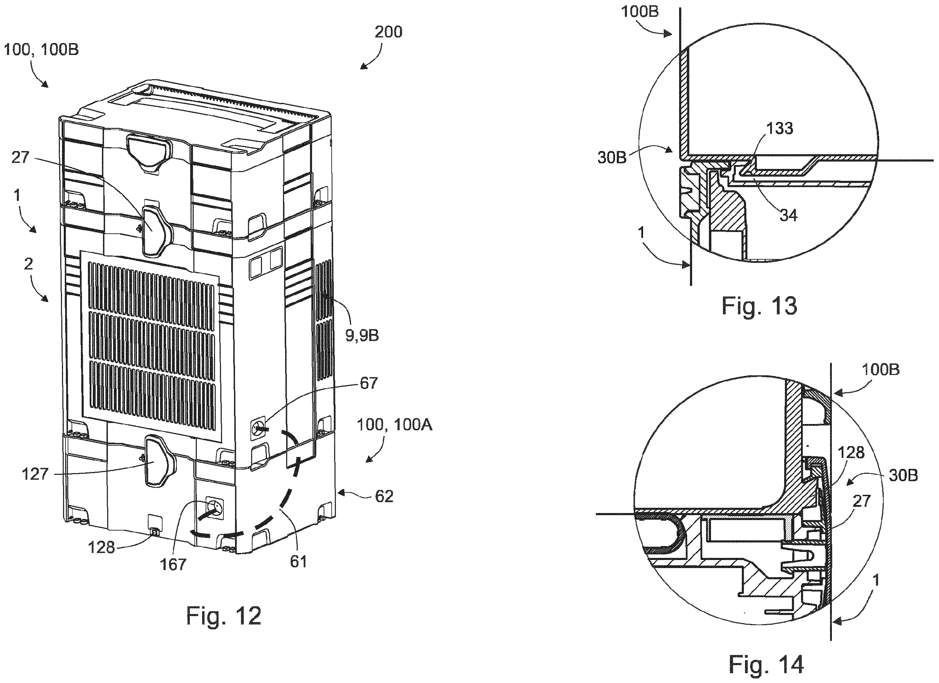

Das Luftreinigungssystem 1 weist weiterhin eine Kopplungsschnittstelle 30 auf, mit der eine lösbare, vertikal zugfeste Kopplung zu einer oder zu mehreren Systemkisten 100 herstellbar ist. Die Kopplungsschnittstelle 30 ist beispielsweise in Figuren 1 bis 3 zu erkennen. Das Luftreinigungssystem 1 kann zusammen mit der einen oder den mehreren Systemkisten 100 einen vertikalen Stapel bilden kann. Eine Stapelanordnung 200 bestehend aus dem Luftreinigungssystem 1 und Systemkisten 100 ist in Figur 12 dargestellt.

Die Kopplungsschnittstelle 30 umfasst eine untere Kopplungsschnittstelle 30A, die eine untere lösbare, vertikal zugfeste Kopplung zu einer unteren Systemkiste 100A bereitstellt, und eine obere Kopplungsschnittstelle 30B, die eine obere lösbare, vertikal zugfeste Kopplung zu einer oberen Systemkiste 100B bereitstellt.

Die Kopplungsschnittstelle 30 umfasst mehrere Kopplungsabschnitte. Die Kopplungsabschnitte umfassen zweckmäßigerweise einen oder mehrere feststehende Kopplungsabschnitte, beispielsweise eine oder mehrere Kopplungsvertiefungen 33 und/oder eine oder mehrere Kopplungsvorsprünge 34. Zweckmäßigerweise umfasst die Kopplungsschnittstelle ferner wenigstens einen (exemplarisch genau einen) beweglich gelagerten Kopplungsabschnitt, beispielsweise einen Kopplungsriegel 27 oder eine Kopplungsklinke. Der Kopplungsriegel 27 ist insbesondere als Drehriegel, exemplarisch als T-förmiger Drehriegel, ausgeführt.

Die obere Kopplungsschnittstelle 30B umfasst exemplarisch mehrere obere Kopplungsabschnitte, die insbesondere an der Deckenwand 17 angeordnet sind. Exemplarisch umfassen die oberen Kopplungsabschnitte Kopplungsvertiefungen 34, die insbesondere an der Deckenwand 17 angeordnet sind. Zweckmäßigerweise umfassen die oberen Kopplungsabschnitte einen Drehriegel 27, der insbesondere oben an einer der Seitenwände 12 angeordnet ist.

Die untere Kopplungsschnittstelle 30A umfasst exemplarisch mehrere untere Kopplungsabschnitte, die insbesondere an der Bodenwand 16 angeordnet sind. Exemplarisch umfassen die unteren Kopplungsabschnitte 30A untere Kopplungsvorsprünge 33, die insbesondere an der Bodenwand 16 angeordnet sind und beispielsweise als Standfüße ausgeführt sind. Zweckmäßigerweise umfassen die unteren Kopplungsabschnitte 30A einen vorderen Kopplungsvorsprung 28, der insbesondere an der gleichen Seitenwand 12 wie der Drehriegel 27 angeordnet ist.

Die Kopplungsschnittstelle 30 ist zweckmäßigerweise derart ausgeführt, dass sie mit einer identischen Kopplungsschnittstelle einer Systemkiste 100 koppelbar ist, welche auch als Systemkisten-Kopplungsschnittstelle 130 bezeichnet ist.

In Figuren 13 und 14 ist die obere Kopplungsabschnitte 30B der Kopplungsschnittstelle 30 mit unteren Systemkisten-Kopplungsabschnitten 130A einer oberen Systemkiste 100B gekoppelt. Hierbei sind Systemkisten-Kopplungsvorsprünge 133 der Systemkisten-Kopplungsschnittstelle 130 in Eingriff mit Kopplungsvertiefungen 34 und ein vorderer Systemkisten-Kopplungsvorsprung 128 der oberen Systemkiste 100B ist in Eingriff mit dem Kopplungsriegel 27.

Ebenso können die unteren Kopplungsabschnitte 30A der Kopplungsschnittstelle 30 mit oberen Systemkisten-Kopplungsabschnitten 130B einer unteren Systemkiste 100A gekoppelt sein. Hierbei sind die unteren Kopplungsvorsprünge 33 der Kopplungsschnittstelle 30 in Eingriff mit Systemkisten-Kopplungsvertiefungen 134 der unteren Systemkiste 100A und der vordere Kopplungsvorsprung 28 ist in Eingriff mit einem Systemkisten-Verriegelungsmittel 127 der Systemkiste 100.

Wie in Figur 4 dargestellt, kann das Lufteinigungssystem 1 eine Tragstruktur 43 aufweisen, die in dem Gehäuseunterteil 10 aufgenommen ist. Die Tragstruktur 43 ist strukturell mit dem Gehäuseunterteil 10 verbunden. Insbesondere verbindet die Tragstruktur 43 das erste und das zweite Gehäuseteil 2A, 2B mechanisch miteinander. Somit werden das erste und das zweite Gehäuseteil 2A, 2B mittels der Tragstruktur 43 aneinander festgelegt. Dies ist besonders vorteilhaft, wenn das erste Gehäuseteil 2A das erste Gehäuseunterteil 10A und das zweite Gehäuseteil 2B das zweite Gehäuseunterteil 10B umfasst. In diesem Fall bildet die Tragstruktur 43 eine zugfeste Verbindung zwischen erstem Gehäuseunterteil 10A und zweitem Gehäuseunterteil 10B.

Vorliegend weist die Tragstruktur 43 Schraubdome 42C auf, mit denen die Tragstruktur 43 mittels Schrauben an dem ersten und dem zweiten Gehäuseunterteil 10A, 10B angeschraubt ist oder anschraubbar ist. Die Schraubdome 42C umfassen vorteilhafterweise obere und untere Schraubdome. Die oberen Schraubdome dienen der Verbindung der Tragstruktur mit dem oberen Gehäuseunterteil 10B. Die Schrauben werden hier über den zweiten Aufnahmeraum 3B durch den Zwischenboden 18 in die jeweiligen oberen Schraubdome eingeschraubt. Die unteren Schraubdome dienen dazu die Tragstruktur 43 mit dem ersten Gehäuseunterteil 10A zu verbinden. Hierzu werden Schrauben von unten durch die Bodenwand 16 in die jeweiligen unteren Schraubdome eingeschraubt.

Vorliegend bildet oder umfasst die Strömungskanalstruktur 42 die Tragstruktur 43.

Auf diese Weise kann die Strömungskanalstruktur 42 bei der Montage in das erste Gehäuseunterteil 10A eingebracht und durch die Tragstruktur 43 mit diesem strukturell verbunden, beispielsweise - wie oben erläutert - mittels den Schraubdomen 42C an diesem verschraubt werden. Anschließend kann das zweite Gehäuseunterteil 10B auf das erste Gehäuseunterteil 10A aufgesetzt und durch die Tragstruktur 43 mit dem ersten Gehäuseunterteil 10A verbunden werden.

Dies ist besonders vorteilhaft, wenn das Luftreinigungssystem 1 an einem der Kopplungsabschnitte 30A, 30B mit einer oder mehrerer Systemkisten 100 gekoppelt ist, da die vertikalen Zugkräfte somit von der Tragstruktur 43 aufgenommen werden.

Das Ausführungsbeispiel gemäß den Figuren 1 bis 4 weist einen Filterzugang 25 auf einer der Seitenwände 12 auf. Der Filterzugang 25 ist ein Teil der Seitenwand 12, der eine Filterzugangsöffnung 251 zumindest teilweise verschließt, so dass ein Luftfilter 46 auswechselbar in dem Strömungskanal 41 angeordnet ist.

Durch die Filterzugangsöffnung 251 ist der Luftfilter 46 aus dem Gehäuse 2 entnehmbar und/oder einsetzbar, so dass er ausgewechselt oder gereinigt werden kann. Der Luftfilter 46 wird exemplarisch in Richtung der Rotationsachse R durch die Filterzugangsöffnung 251 aus dem Strömungskanal 41 gezogen. In einer alternativen nicht dargestellten Variante wird der Luftfilter 46 quer zur Rotationsachse R aus dem Gehäuse 2 gezogen.

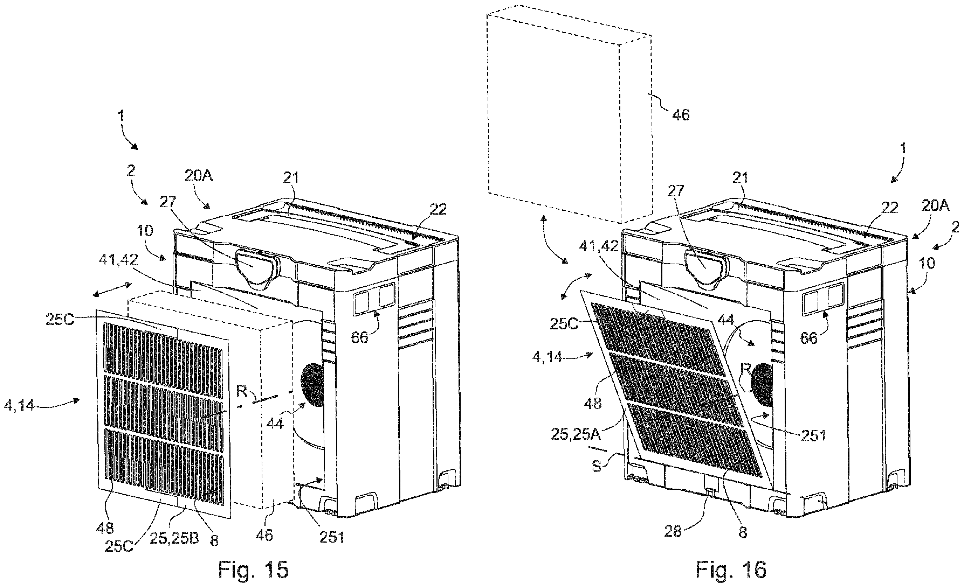

Der Filterzugang 25 umfasst beispielsweise eine Zugangsklappe 25A, wie in Figur 16, oder ein Zugangsdeckel 25B, wie in Figur 15, schematisch dargestellt.

Die Zugangsklappe 25A weist ein eine Scharnierachse S bildendes Scharnier auf, wobei die Zugangsklappe 25A exemplarisch an einer der Bodenwand 17 zugewandten Seite einer der Seitenwände 12 drehbar gelagert ist, um die Filterzugangsöffnung 251 freizugeben. Die Scharnierachse S ist in diesem Fall also horizontal ausgerichtet. In ähnlicher Weise kann die Zugangsklappe 25A als Tür ausgebildet sein. In diesem Fall ist die Scharnierachse S vertikal ausgerichtet und an einer der Seitenwände 12 angeordnet. Die Zugangsklappe weist auf ihrer der Scharnierachse S gegenüberliegenden Seite eine Zugangsverriegelung 25C auf mit der die Zugangsklappe 25A in einer Geschlossenstellung mit dem Gehäuse 2 verriegelt werden kann.

Der Zugangsdeckel 25B ist exemplarisch über zwei auf entgegengesetzten Seiten des Zugangsdeckels 25B lösbar an dem Gehäuse 2 befestigt, so dass er in einfacher Weise von dem Gehäuse 2 entfernt werden kann, um den Luftfilter 46 zu wechseln.

Vorteilhafterweise umfasst der Filterzugang 25 den Lufteinlass 8 zumindest teilweise, in dem vorliegenden Ausführungsbeispiel vollständig.

Gemäß einer Variante umfasst das Luftreinigungssystem 1 zumindest einen Energiespeicher 62C, wobei der zumindest eine Energiespeicher 62C in dem Gehäuse 2 aufgenommen ist und/oder in das Gehäuse 2 integriert ist. Der Energiespeicher 62C ist beispielsweise ein wiederaufladbarer Akku, vorzugsweise mit einer Nennspannung von 18 Volt oder größer, beispielsweise 36 Volt.

In einer Variante ist in dem Gehäuse 2 eine Ladevorrichtung vorgesehen, mit der der zumindest eine Energiespeicher 62) über die elektrische Schnittstelle 67 aufladbar ist.

Zusätzlich oder alternativ zu den zuvor beschriebenen Varianten kann die elektrische Schnittstelle 67 eine Akku-Schnittstelle 68 umfassen. Die Akku-Schnittstelle 68 ist ausgebildet um mechanische und elektrische Kopplungselemente zur Kopplung mit einem Akkupack 69 bereitzustellen, um das Luftreinigungssystem 1 mit elektrischer Energie zu versorgen. Die Akku-Schnittstelle 68 ist exemplarisch außen an dem Gehäuse 2 angeordnet, wie dies in Figuren 16A und 16B gezeigt ist. Alternativ kann es auch vorgesehen sein, dass die Akku-Schnittstelle 68 in dem zweiten Aufnahmeraum 3B angeordnet ist.

In einer Alternative umfasst die Akku-Schnittstelle 68 zumindest eine erste und eine zweite Akkuschnittstelle 68A, 68B und das Akkupack 69 umfasst zumindest ein erstes und ein zweites Akkupack 69A, 69B.

Vorzugsweise ist das zumindest eine Akkupack 69, 69A, 69B ein mit einem Powertool kompatibles Akkupack. Die Akku-Schnittstelle 68 somit ausgebildet Akkupacks eines Powertools aufzunehmen.

Figur 7 zeigt ein zweites Ausführungsbeispiel des tragbaren Luftreinigungssystems 1. Das Luftreinigungssystem 1 entspricht in seiner Gestaltung im Wesentlichen der Ausgestaltung des Luftreinigungssystems, wie es in den Figuren 1 bis 5 gezeigt ist. Insofern kann zur Vermeidung von Wiederholungen auf die vorstehenden Ausführungen verwiesen werden. Nachstehend wird daher lediglich auf die Unterschiede eingegangen.

Das Gehäuse 2 des Luftreinigungssystems 1 weist ein Gehäuseunterteil 10 auf, welches ein erstes Gehäuseteil 2A und ein zweites Gehäuseteil 2B umfasst, die entlang einer Gehäuse-Trennung 2C aneinander liegen. Das erste und das zweite Gehäuseteil 2A, 2B umfassen die Bodenwand 16 jeweils teilweise. Das erste Gehäuseteil 2A bildet also ein Gehäusevorderteil und das zweite Gehäuseteil 2B ein Gehäusehinterteil. Die Gehäuse-Trennung 2C verläuft also in einer Richtung senkrecht zur Rotationsachse R.

In dem vorliegenden Ausführungsbeispiel ist statt des Radiallüfters 441 ein Axiallüfter 442 verwendet. Somit weist das Luftreinigungssystem 1 lediglich einen axialen Luftauslass 9A auf. Grundsätzlich ist es denkbar auch bei Verwendung eines Axiallüfters radiale Luftauslässe 9B zu verwenden.

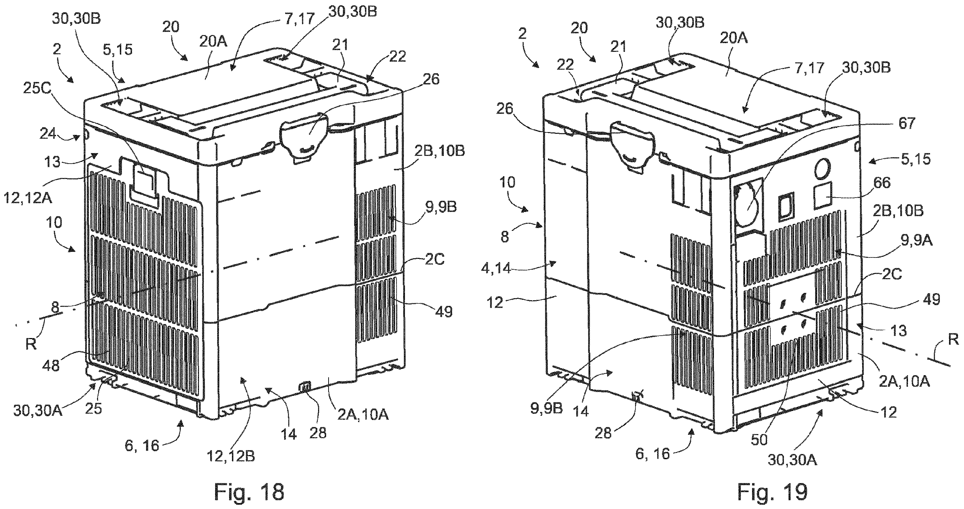

Die Figuren 18 und 19 offenbaren ein drittes Ausführungsbeispiel des tragbaren Luftreinigungssystems 1. Das Luftreinigungssystem 1 entspricht in seiner Gestaltung im Wesentlichen der Ausgestaltung des Luftreinigungssystems, wie es in den Figuren 1 bis 4 gezeigt ist. Insofern kann zur Vermeidung von Wiederholungen auf die vorstehenden Ausführungen verwiesen werden. Nachstehend wird daher lediglich auf die Unterschiede eingegangen.

Die erste Seitenwand 12A ist vorliegend an einer der seitlichen Seitenwandabschnitte 13 angeordnet, die zweiten Seitenwände 12B umfassen vorliegend den der ersten Seitenwand 12A gegenüberliegenden seitlichen Seitenwandabschnitt 13, den vorderen Seitenwandabschnitt 14 und den hinteren Seitenwandabschnitt 15.

Die Rotationsachse R des Lüfters 44 erstreckt sich entlang des vorderen Seitenwandabschnitts 14 und/oder des hinteren Seitenwandabschnitts 15. Eine Hauptströmungsrichtung des in dem Gehäuse 2 angeordneten Strömungskanals 41 erstreckt sich somit entlang der längeren der beiden horizontalen Abmessungen des Gehäuses 2. Auf diese Weise ist es möglich eine größere Filtertiefe in dem Aufnahmeraum 3 unterzubringen, was die Durchströmte Fläche signifikant vergrößert.

## Patentansprüche

1. Tragbares Luftreinigungssystem (1) umfassend ein Gehäuse (2) mit einer Bodenwand (16), einer Deckenwand (17) und sich zwischen der Bodenwand (16) und der Deckenwand (17) erstreckenden Seitenwänden (12), die einen Aufnahmeraum (3), insbesondere einen ersten Aufnahmeraum (3A), umgeben,
wobei in dem Aufnahmeraum (3), insbesondere dem ersten Aufnahmeraum (3A), ein Strömungskanal (41) zur Aufnahme einer Luftfiltereinheit (40) angeordnet ist, der sich zwischen einem Lufteinlass (8) in einer ersten Seitenwand (12A) des Gehäuses (2) und einem Luftauslass (9) in zumindest einer zweiten Seitenwand (12B) des Gehäuses (2) erstreckt,
wobei die Luftfiltereinheit (40) einen Luftfilter (46) und einen um eine Rotationsachse (R) rotierbaren Lüfter (44) zur Erzeugung eines Luftstroms vom Lufteinlass (8) zum Luftauslass (9) aufweist,
**dadurch gekennzeichnet,**
**dass** eine durchströmte Fläche des Lufteinlass (8) kleiner oder gleich ist als eine durchströmte Fläche des Luftauslass (9) und/oder
**dass** wobei der Luftauslass (9) zumindest zwei Luftauslassabschnitte aufweist, die an zumindest zwei verschiedenen Seitenwänden (12), insbesondere von der ersten Seitenwand (12A) verschiedenen Seitenwänden (12), angeordnet sind.

2. Tragbares Luftreinigungssystem nach Anspruch 1, wobei der Lufteinlass (8) und der Luftauslass (9) auf gegenüberliegenden Seitenwänden (12) des Gehäuses (2) angeordnet sind und/oder die erste Seitenwand (12A) einer der zweiten Seitenwände in Richtung der Rotationsachse (R) gegenüberliegend angeordnet ist und/oder
der Luftauslass (9) oder ein Abschnitt des Luftauslasses (9) auf einer der ersten Seitenwand (12A), vorzugsweise in Richtung der Rotationsachse (R), gegenüberliegenden Seitenwand angeordnet ist.

3. Tragbares Luftreinigungssystem nach Anspruch 1 oder 2, wobei die zumindest zwei Luftauslassabschnitte an benachbarten Seitenwänden (12) und/oder
gegenüberliegenden Seitenwänden (12) angeordnet sind.

4. Tragbares Luftreinigungssystem nach Anspruch 3, wobei die zumindest zwei Luftauslassabschnitte an drei Seitenwänden (12) angeordnet sind, die insbesondere von der ersten Seitenwand (12A) verschieden sind.

5. Tragbares Luftreinigungssystem nach einem der Ansprüche 3 oder 4, wobei der Luftauslass (9) oder einer der Luftauslassabschnitte durch einen axialen Luftauslass (9A) gebildet ist,
der an einer von der Rotationsachse (R) durchdrungenen Seitenwand (12) und/oder an einer der ersten Seitenwand (12A) gegenüberliegenden Seitenwand angeordnet ist, und/oder der Luftauslass (9) oder einer der Luftauslassabschnitte durch zumindest einen radialen Luftauslass (9B) gebildet ist, der an zumindest einer sich in Richtung der Rotationsachse (R) erstreckenden Seitenwand (12) und/oder an zumindest einer der zur ersten Seitenwand (12A) benachbart angeordneten Seitenwände angeordnet ist.

6. Tragbares Luftreinigungssystem nach einem der Ansprüche 1 bis 5, wobei zwei radiale Luftauslässe (9B) vorgesehen sind, die auf einander gegenüberliegenden Seitenwänden (12) angeordnet sind und ein axialer Luftauslass (9A) vorgesehen ist, der an einer zu den radialen Luftauslässen (9B) benachbarten Seitenwand (12) angeordnet ist.

7. Tragbares Luftreinigungssystem nach einem der Ansprüche 1 bis 6, wobei das Gehäuse (2) ein erstes Gehäuseteil (2A) und ein zweites Gehäuseteil (2B) aufweist, die den Aufnahmeraum (3), insbesondere den ersten Aufnahmeraum (3A), aufnehmen und das erste Gehäuseteil (2A) und das zweite Gehäuseteil (2B) entlang einer Gehäuse-Trennung (2C) aneinander angeordnet sind, wobei vorteilhafterweise in dem Gehäuse (2) eine Tragstruktur (43) vorgesehen ist, die mit dem Gehäuse (2) strukturell verbunden und geeignet ist die Luftfiltereinheit (40) zu tragen, und wobei die Tragstruktur (43) das erste und das zweite Gehäuseteil (2A, 2B) mechanisch miteinander verbindet oder das erste und das zweite Gehäuseteil (2A, 2B) mittels der Tragstruktur (43) aneinander festgelegt werden.

8. Tragbares Luftreinigungssystem nach Anspruch 7, wobei das erste Gehäuseteil (2A) ein erstes Gehäuseunterteil (10A) und das zweite Gehäuseteil (2B) ein zweites Gehäuseunterteil (10B) ist, wobei das erste Gehäuseunterteil (10A) die Bodenwand (16) umfasst und das zweite Gehäuseunterteil (10B) an der der Bodenwand (16) abgewandten Seite des ersten Gehäuseunterteils (10A) angeordnet ist, um die Gehäuse-Trennung (2C) zu bilden, und/oder
das erste Gehäuseteil (2A) und das zweite Gehäuseteil (2B) ein Gehäuseunterteil (10) bilden

9. Tragbares Luftreinigungssystem nach Anspruch 7 oder 8, wobei die Gehäuse-Trennung (2C) in einer Ebene parallel zur Bodenwand (16) angeordnet ist.

10. Tragbares Luftreinigungssystem nach einem der Ansprüche 1 bis 9 oder nach dem Oberbegriff des Anspruchs 1, wobei in dem Gehäuse (2) ein Zwischenboden (18) vorgesehen ist, der den Aufnahmeraum (3) in den ersten Aufnahmeraum (3A) zur Aufnahme der Luftfiltereinheit (40) und einen zweiten Aufnahmeraum (3B) unterteilt.

11. Tragbares Luftreinigungssystem nach Anspruch 10, wobei das Gehäuse (2) einen Zugang (20) aufweist, über den der zweite Aufnahmeraum (3B) zugänglich ist, wobei der Zugang (20) vorzugsweise einen Deckel (20A) und/oder eine Schublade (20B) umfasst.

12. Tragbares Luftreinigungssystem nach einem der Ansprüche 10 oder 11, wobei das Luftreinigungssystem (1) ferner ein Netzkabel (61) umfasst, das wahlweise durch einen in dem Gehäuse (2), insbesondere in der Seitenwand (12), angeordneten Durchbruch (63) aus dem zweiten Aufnahmeraum (3B) herausführbar ist und/oder im Betrieb durch den Durchbruch (63) geführt ist und beim Transport in dem zweiten Aufnahmeraum (3B) aufgenommen ist oder in dem zweiten Aufnahmeraum (3B) aufnehmbar ist,
wobei der Durchbruch (63) vorteilhafterweise im Bereich einer durch den Deckel (20A) und die Seitenwände (12) gebildeten Trennbereich angeordnet ist und/oder der Durchbruch (63) durch eine der Seitenwände (12) und/oder den Deckel (20A) begrenzt ist.

13. Tragbares Luftreinigungssystem nach einem der Ansprüche 1 bis 12, wobei das Luftreinigungssystem (1) eine Kopplungsschnittstelle (30) aufweist, mit der eine lösbare, vertikal zugfeste Kopplung zu einer oder zu mehreren Systemkisten (100) herstellbar ist, so dass das Luftreinigungssystem (1) zusammen mit der einen oder mehreren Systemkiste/-n (100) einen vertikalen Stapel bilden kann.

14. Tragbares Luftreinigungssystem nach Anspruch 13, wobei die Kopplungsschnittstelle (30) eine untere Kopplungsschnittstelle (30A) umfasst, mit der in einem Zustand, in dem das Luftreinigungssystem (1) auf eine untere Systemkiste (100A) aufgesetzt ist, eine untere lösbare, vertikal zugfeste Kopplung zu der unteren Systemkiste (100A) herstellbar ist, und/oder eine obere Kopplungsschnittstelle (30B) umfasst, mit der in einem Zustand, in dem eine obere Systemkiste (100B) auf die Schutzhaube aufgesetzt ist, eine obere lösbare, vertikal zugfeste Kopplung zu der oberen Systemkiste (100B) herstellbar ist.

15. Stapelanordnung (200), umfassend ein tragbares Luftreinigungssystem (1) nach einem der Ansprüche 1 bis 14, sowie eine untere Systemkiste (100A) und/oder eine obere Systemkiste (100B), wobei das Luftreinigungssystem (1) auf die untere Systemkiste (100A) aufgesetzt ist und/oder die obere Systemkiste (100B) auf das Luftreinigungssystem (1) aufgesetzt ist, so dass das Luftreinigungssystem (1), die untere Systemkiste (100A) und/oder die obere Systemkiste (100B) zusammen einen vertikalen Stapel bilden, und wobei eine Kopplungsschnittstelle (30) eine untere Kopplungsschnittstelle (30A) umfasst, die eine untere lösbare, vertikal zugfeste Kopplung zu der unteren Systemkiste (100A) bereitstellt, und/oder eine obere Kopplungsschnittstelle (30B) umfasst, die eine obere lösbare, vertikal zugfeste Kopplung zu der oberen Systemkiste (100B) bereitstellt.
